(19) Europäisches Patentamt

European Patent Office

Office européen des brevets

(11) **EP 1 374 961 A2**

## (12) EUROPEAN PATENT APPLICATION
published in accordance with Art. 158(3) EPC

(43) Date of publication:
02.01.2004 Bulletin 2004/01

(51) Int Cl.[7]: **A63H 33/04**

(21) Application number: 00975755.0

(22) Date of filing: **24.11.2000**

(86) International application number:
**PCT/CR2000/000005**

(87) International publication number:
**WO 2002/041962 (30.05.2002 Gazette 2002/22)**

(84) Designated Contracting States:
**AT BE CH CY DE DK ES FI FR GB GR IE IT LI LU MC NL PT SE TR**
Designated Extension States:
**AL LT LV MK RO SI**

(71) Applicant: **Pacheco, Francisco**
**Heredia, Costa Rica (CR)**

(72) Inventor: **Pacheco, Francisco**
**Heredia, Costa Rica (CR)**

(74) Representative: **Lane, Cathal Michael et al**
**c/o Tomkins & Co.**
**5 Dartmouth Road**
**Dublin 6 (IE)**

(54) **BUILDING BLOCK**

(57)

## Description

### TECHNICAL FIELD:

This invention refers to the field of structural construction through block gearing. The tiling system has other applications in the fields of geology, chemical structures, communication networks and graphic design. The initial scheme is directed towards the production of toy building games or systems called "Toy Building Block"

### BACKGROUND ART:

The current Building Block toys are inspired in the cube as the model for fitting. The cube can only be projected in straight lines and in 90-degree angles. This characteristic constitutes a strong point in the case of square edifications, but the mold lacks functionality when constructing curved figures, for example all the designs of nature. Although we are not clear about the tiling system the nature has, we know that it is not inspired on the cube, but on the sphere, represented in the atoms and molecules.

In order to join through spheres, the union axis must make contact in different directions at the same time, which complicates the gearing system. A practical solution is to use magnetism as the attachment force between the pieces. Notwithstanding, a symmetrical scheme to distribute the energy within the sphere was not yet discovered, until now.

### BRIEF DESCRIPTION:

Cut 36 squares measuring A = 1/8 of the circumference (C). Group the squares in 18 pairs in the following way: join each pair only by the borders in such a way that the two squares form an 8- point star. After the union you have a figure with 2 flat lids (each one measuring A/sqrt(2)) and 4 fitting angles on the sides.

The fitting angles have to be adjusted to 45 degrees, which obliges the exterior lid to adopt a spherical curvature. The figures are joined by the fitting angles to form a complete ring with 8 figures (45°x8=360°). The ring is repeated around each axis (xyz) to form 3 interbedded rings with 18 figures.

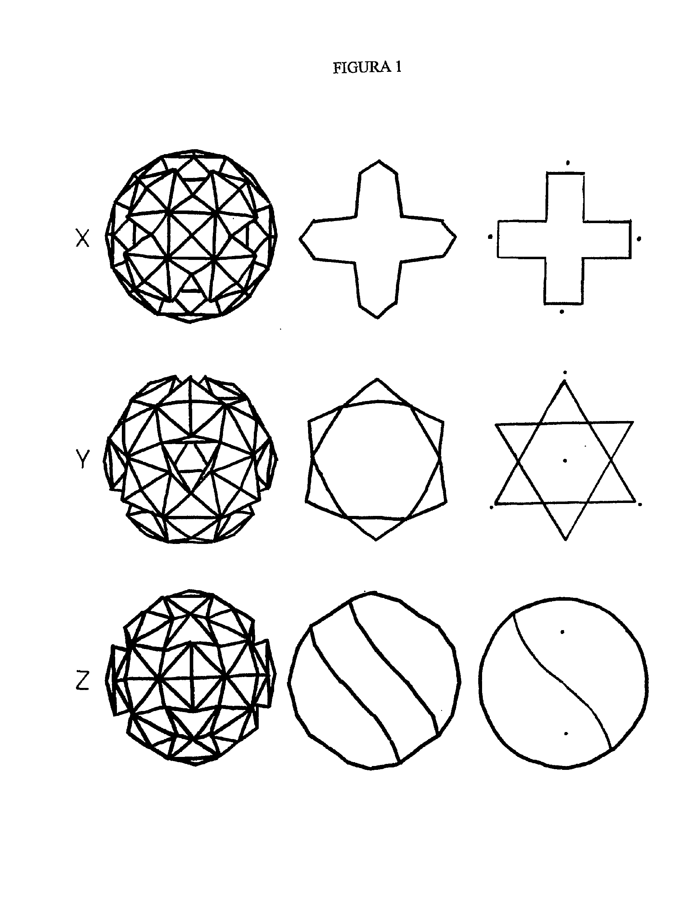

This procedure is so simple since the nature of the square contains in its proportions the capacity to form spheres. It is the exact relation between the side and the diagonal, what allows the 36 squares to form a union system that is perfectly symmetrical and exact. FIG. 1, shows three points of view for the Building Block.

### SURFACE CHEME CR3:

This patent application is related with the preceding one titled COVER FOR A BALL OR SPHERE, document number PCT/CR00/00003, filing date 10.10.2000, heretofore "Surface Scheme" or "CR3".

The Surface Scheme states the symmetrical accommodation of 18 square pieces with its diagonal measuring d= 1/8C (note that above: 1/8C=A, but we will later see how d=A). The squares are joined by their diagonals forming a circle of eight around the axes (x.y.z). Even though three circles of 8 add up to 24 pieces, the sphere can be built with 18, since the rings share squares in 6 intersections. These 6 squares are called (X) because the letter represents the crossing of the two directions. The other 12 squares are called (Z) because this letter represents the ecliptic (notice that the name (Z) is new, in CR3 it was (H)).

If the 6 centers (X) represent the cubes faces, the 8 centers (Y) are equivalent to the corners. Furthermore (Z) is located in the borders of the cube in an intermediate zone between (X) and (Y).

CR3 terms and formulas glossary:

| Diagonal of the "small square" | $(d)= 1/8\ C$ |
|---|---|
| Side of the "small square" | $(a)= d/sqrt(2)$ |
| Side of the equilateral triangle | $(c)= sqrt(3)*(d-a)$ |
| Height of the triangle | $(h)= 1/2c*sqrt(3) = 3/2\ (d-a)$ |
| Height of the trapeze | $(b)= sqrt(a*a-c*c); e = \frac{1}{2}\ (a-c)$ |
| Length of the ecliptic strip | $(2k)= 6b+3a+3c;$ width: $b+e$ |

Measurements of the circumferences for the sphere:

$$C1 = 8d$$

$$C2 = 2a + 4b + 4h + 2d$$

$$C3 = 2 * sqrt (k*k + (b+c)*(b+c))$$

When c=sqrt(3)*(d-a), then h=3/2(d-a) and also C1=C2+4(a-b)≈C3
When c=6,322...%C, then C3=C1 and if the ecliptic is fixed altering only c2 ≈ 5.5213...%, then C1=C2=C3.

The Surface Scheme proposes an accommodation of 98 panels simplified to 50: 18 small squares (a), 8 equilateral triangles (c) and 24 trapezes (formed by the rectangle (ab) and the two triangles (abc)). 42 panel option: 18 squares (a) and 24 pointed trapezes formed by the union of the trapeze with one third of the equilateral triangle (c). 26 panel option: three pointed trapezes form a 3-way helix/propeller to obtain 18 squares and 8 helixes. The helix represents the space that has to be emptied to allow for the gearing between spheres, 24 piece option: The pieces are all similar in the form of a kite and their structure consists of the union of a trapeze with 1/4 of a square in its 3 sides (a) and 1/3 of an equilateral triangle in its side (c).

We should clarify some concepts and ideas from CR3. In that document we mention that 18 black squares represent the true surface of the cube and the rest of the white pieces constitute empty space. A more certain explanation is that the white pieces are folded towards the interior of the sphere. This folding operation is of great importance for this document, since it explains the structure of the Building Block. Furthermore, we have to correct the meaning of the terms "small square" and "big square". The "small square" will continue being the one with the measurements a=d*sqrt(2) and the diagonal d=1/8C. Notwithstanding, the "big square" has new measurements: A=d and D=2a. To avoid confusions with the descriptions of the CR3, the measures of the face of the cube will no longer be A and D, but AA=2d and DD=4a.

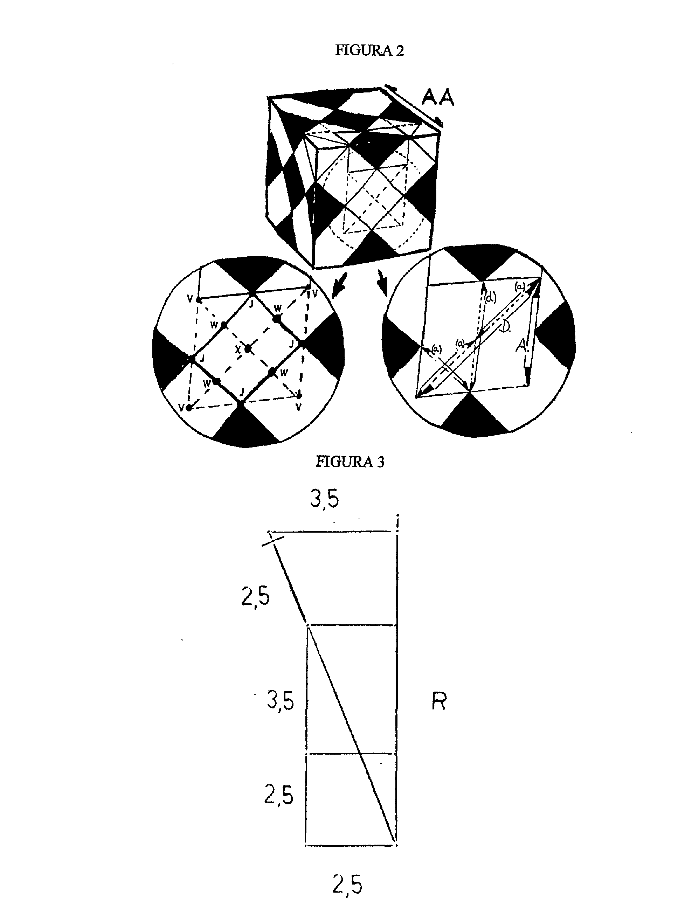

The corners of the "big squares" are called (V) and between these corners we find (J). The four points (J) form the "small square" inscribed inside the "big square". With the diagonals of the "small square" you measure the sides of the "big square" and with the sides you measure the diagonals. We will call (W) the central point of the path (a) of the small square. (FIG. 2)

| Small square: | | Big square: |
|---|---|---|
| Side: | JWJ=VWX=WXW=a=½D | VJV=JXJ=A=d |
| Diagonal: | JXJ = d = A | VWXWV = D = 2a |

The vertices (V) appear at the white whole square diagonal crossing in the cube, while in the Building Block the vertices equal a point towards the interior of the surface, where 3 folded neighboring big squares unite.

The points (T) are located in the corners of the equilateral triangle. So J=T only in the corners of (Z) that are closer to (Y). Furthermore (B) appears on the central point of (c), then BY=1/3h and YT=2/3h, YT in the sphere measures (d-a).

## BUILDING BLOCK'S LOCATION OF GEARINGS:

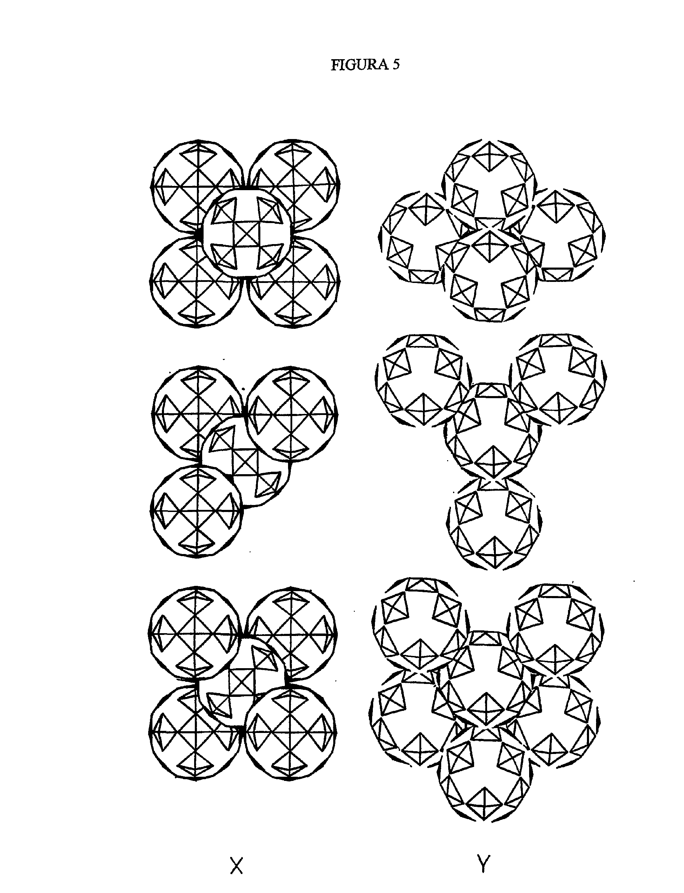

Take a cube with sides (2R), where each of the 8 corners is a sphere with radius (R). It is impossible to place a ninth sphere with a similar radius in the nucleus of the cube, unless you allow an overlap among the spheres. The calculation for the overlap is as follows: the space diagonal of the cube measures sqrt(12R*R): the corner radiuses and the double radius of the ninth sphere add up to 4R and the overlap is 4R-sqrt(12R*R) If we are able to build a sphere with a gearing of ½ overlap we can introduce the ninth sphere and so connect the space not only through the axes (x,y,z,) but also through the 4 diagonal axes or space diagonals. (FIG. 5).

Since the ninth sphere is in the center, the connection is given with the 8 spheres around it. In order to maintain the symmetry, the gearing must be located in the centers (Y) of the 8 quadrants.

## STRUCTURE OF THE BUILDING BLOCK:

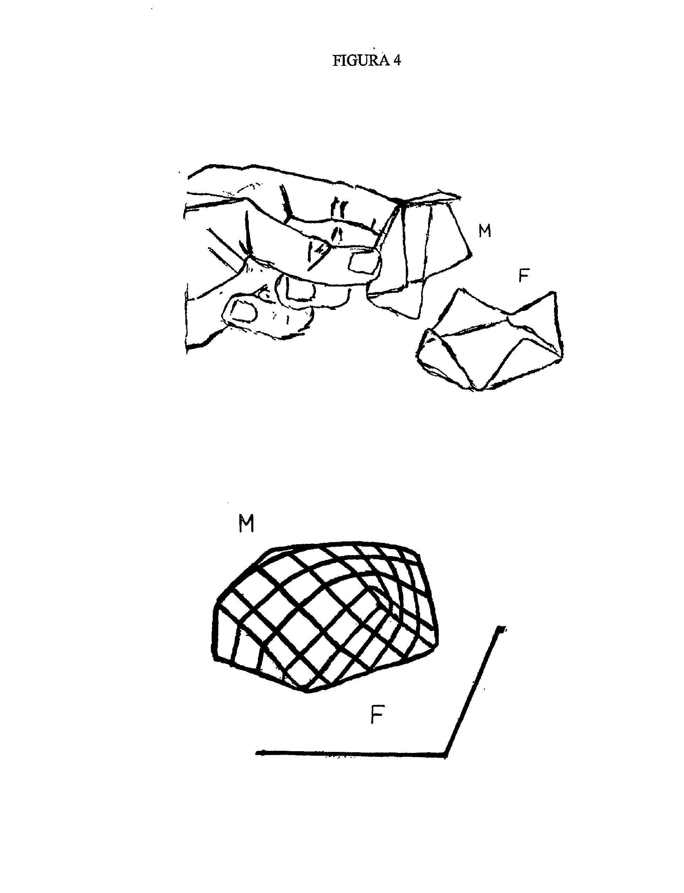

The starting point is the square. The union of two squares forms a Pair and the union of 18 Pairs forms a Building Block that allows for the joining in the 7 directions (3 axes + 4 diagonal axes). The basic component of the Building Block is the Pair, made up by the union of two big squares A: (M) in the exterior part and (F) in the interior part of the Building Block. (M) and (F) must be joined in a complementary way. It starts at any point: J of M and V of F, they are joined at the sides until the next intersection V of M with J of F and it continues that way until arriving to the starting point. At the end you obtain eight J-V unions. At the moment of the folding, the "big square" forms a plane with a length of "small square" and the leftovers at the corners are folded in the direction of its pairs corners. These leftovers are triangles JVJ and are interbedded between (F) and (M) to close the existing space between the two planes (FIG. 4).

The Support that serves as guide to locate each of the pairs is a "small rhombicuboctahedron". The figure contains the 18 bases to accommodate the Pairs on their side (F). The Support is nothing more than a visual guide since the Pairs are sustained among themselves.

If we cut over any circumference C1, the Support appears like a regular octagon. The path of the "big square" that appears over the Support is WXW and it must not be mistaken with JWJ with a similar measurement (FIG. 2). The total path of the cut at F is D=2a, that is equal to the sum of

$$WX + WV.$$

The leftovers of (F), called WV=1/2a, go up seeking the encounter with (M), but they cannot go farther, since their job is to maintain the 45 degree angle that allows for the formation of the Building Block. (M) has to reach (F) to close the opening (FIG. 3).

The important thing is that with 18 Pairs you can form the Building Block and 8 gearings with the exact needed measurement for the overlap that allows for the introduction of the ninth sphere and for the connection of the 7 axes: as if by magic.

## POSITIONING OF ATTACHEMENT MEANS:

Magnetism has to be seen as something intermittent between positive and negative. We prefer to explain the magnetic flow in terms of giving and receiving: Black for the first one and White for the second one.

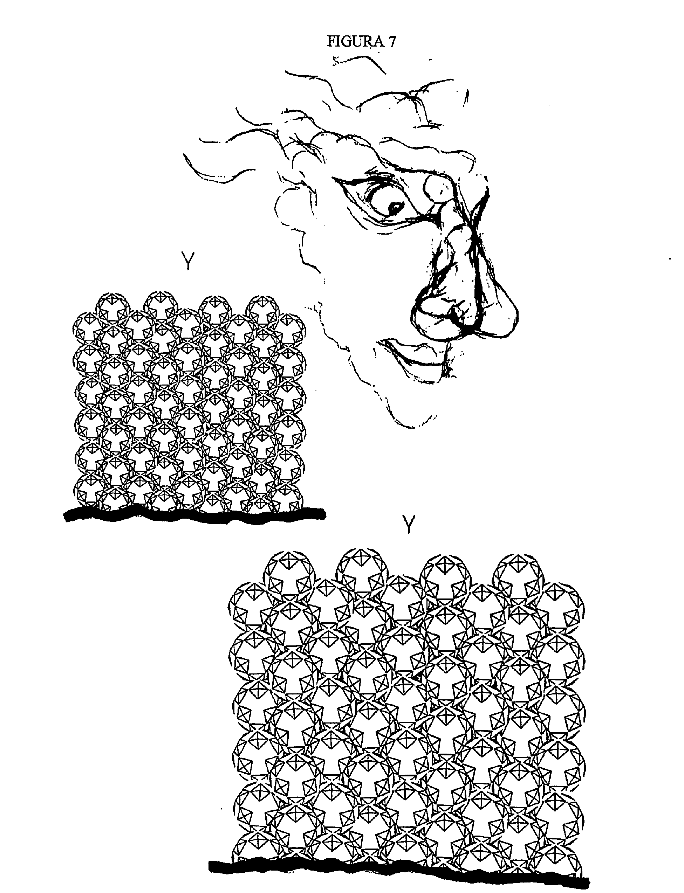

The form of the square is efficient in order to accommodate intermittent binary systems. There are two options for the distribution: 1) In pairs a) 2 rectangles (FIG. 7-1 A) b) 2 triangles (FIG. 7-1 B); 2) In fours a) 4 squares (FIG. 7-2A) b) 4 triangles (FIG. 7-2B). 1) describes the Pair 7. (FIGS. 7-1A, 7-1B) and 2) describes the Pair X(FIGS. 7-2A, 7-2B): a) describes M (FIGS. 7-1A, 7-2A) and b) describes F (FIGS. 7-1B, 7-2B).

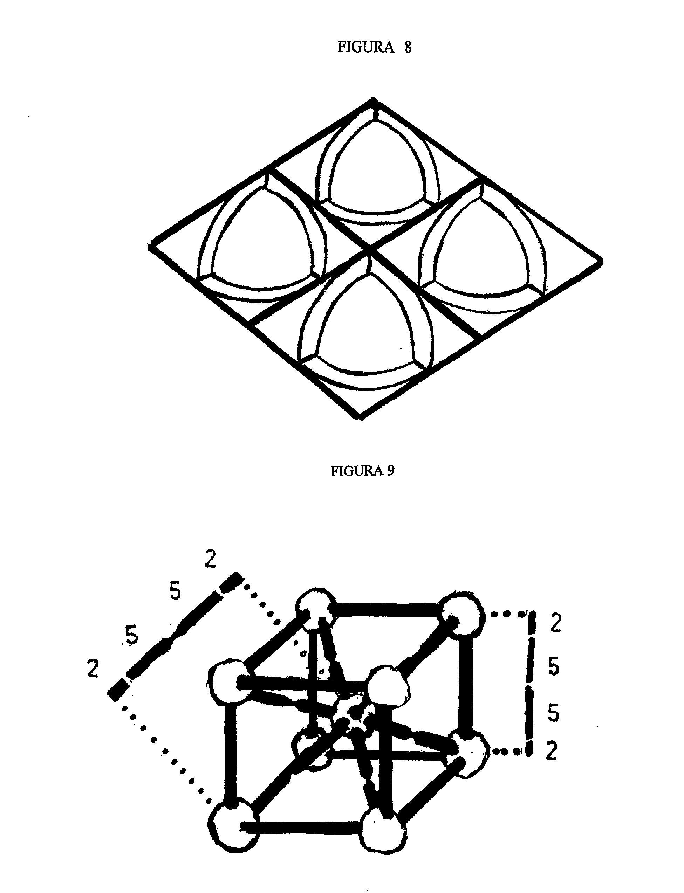

If we represent the magnetic distribution with black and white the two external configuration for each quadrant of the Building Block are: 1) Black: the triangle Y and the three corners of X (1/4 of square M) in black and the three rectangles of Z in white (FIG. 8-1A). 2) White: Is the opposite of configuration 1) (FIGS. 8-2A). The internal configuration is similar, only that the triangles and double triangles substitute the squares and double squares (FIGS. 8-1B, 8-2B).

We will try to present a practical system to describe the different quadrants of the Building Block. We number each face in accordance with the numbers of a game die (dice): 1 on the front, 2 top left, 3 top right, 4 bottom left, 5 bottom right and 6 on the back. The mirror faces are colored in the same way: 3 & 4 red, 2 & 5 blue, 1 & 6 yellow. The secondary colors appear on the borders of the die, 23, 35, 45, and 24 in violet, 12, 26, 56 and 15 in green and 13, 36, 46 and 14 in orange. If we combine the described color location with the white and black magnetic configuration we obtain lighter and darker colors.

The name of the 8 quadrants and corners (Y) will be determined by the union of the faces: 1-2-4, 1-3-5, 1-2-3, 1-4-5, 2-4-6, 3-5-6, 2-3-6 and 4-5-6, (145, 246, 356 and 123) work alternately with the group made up of (124, 135, 236 and 456). Each 4 corner group is separated among its members by DD and from the members of the other group by AA. This is reasonable since the distance between similar charges must be greater than the distance between contrary charges.

The gearing among spheres takes place at (Y) and with this union the triangular aperture closes in a perfect way, and it creates a bridge for the continuity of the magnetic flow. In (X) there is no gearing and in (Z), the intermediate zone.

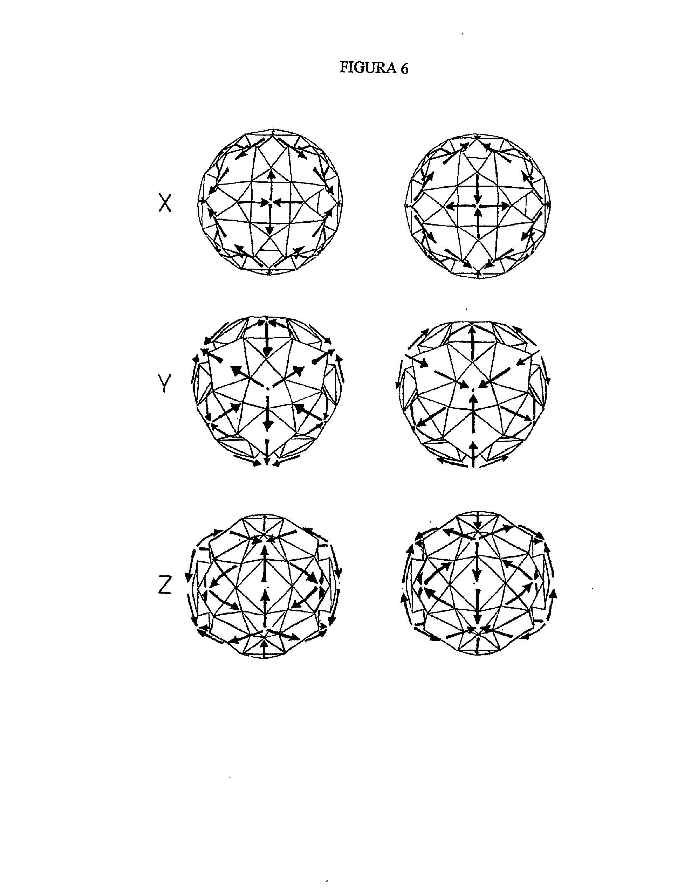

In the FIG. 6 we describe the two moments that the Flow has: in Y transition, in X diversion and in Z continuity or flow. If we imagine a Seesaw, (X) is the base, (Y) the sitting place and (Z) the board.

For the case of the Toy Building Block in an initial stage, the creation of the magnetic flow is not necessary but only the right location of the polarities at the centers (Y). Since we know the measurement of the overlap (½a) the location of the magnet must leave a free space of (½a) taken from the 3 points T. In other words, the place where the two magnets from neighboring Building Blocks meet at (Y), is at a depth close to (½a)from the surface of the sphere. Versions with springs will allow a movement of sand union, to give the total gearing rigidity or flexibility: in the same way magnets deeper or wider than the aperture of the triangle can assure a stronger hold.

**BUILDING BLOCK FROM BALL COVER APPLICATION CR3:**

The toy building block described here was previously described and characterized in claim to of application CR3 in the following way:

> 1) ...a Building Block for games or edifications.
> 2) with magnets located in the points (Y).
> 3) where the polarity of each magnet is contrary to the polarity of its mirror point (Y).
> 4) where the trapezes and the triangles form a sinking in relation to the spherical surface
> 5) that allows to attach a second sphere of a contrary polarity.
> 6) with the coupling forming a Star of David.
> 7) This attachement or coupling can be carried out towards the seven possible directions (3 for the X poles and 4 for the Y poles;
> 8) where without prejudice to the described ornaments, the spherical cube has the eight quadrants colored in yellow, blue, red and green, where each quadrant has a similar color to the one of its mirror quadrant;
> 9) where the depth of the point (Y) where the magnets are located must be such as to allow the accommodation in the following way: one spherical cube with (X) in the North Pole, attach are four spheres on the four points (Y) of the northern hemisphere in the form of the Star of David, in this position the South Pole of these four spheres should reach the equatorial line of the First sphere, such adjustment is achieved by deepening the trapezes and the triangles (Y);
> 10) where a more complex scheme can place magnets in all of the squares in such a way that the squares (H) divide their charge in two halves and the squares (X) divide it in 4 halves:
> 11) where the way of uniting all the options can be with the polarity defined by a female-male system but it requires more adjustments.

**Claims**

1. In a toy building set, a building block of a normally spherical shape comprising a spherical surface and at least eight cavities extending inwardly from said surface and arranged among the centers (Y) of each quadrant of said building block, said cavities extending normally inwardly along the axis of said centers (Y) towards the center of said building block and at the same time also extending inwardly but in a three-channel fashion towards the crossings (X) that define the orthogonal limits of each of said quadrants, whereby a said three-channel cavity on one of said blocks may be geared with a said three-channel cavity of another of said blocks, forming a "Star of David" type of union.

2. A building block as set forth in claim 1, wherein the depth of said three-channel cavities from said surface is at least close to (½a), being the length (a) dose to the total circumference of said Building Block divided by (16/sqrt(2)).

3. A building block as set forth in claim 2, wherein the periphery of said three-channel cavities at said surface of said building block is delimited by a figure formed normally by the union of one equilateral triangle with sides (c) and three trapezes with one base and two legs of equal length (a) and one smaller side of length (c), wherein the sides (c) of said triangle contact the small sides (c) of said trapezes, the longitudinal central axis of said triangle passing through said centers (Y) and the bases (a) of said trapezes arranged in direction to the orthogonal crossings (X) of said quadrants of said building block, wherein the length (c) ranges normally close to the length (sqrt(3)*(a*sqrt (2)-a)).

4. A building block as set forth in claim 1, wherein said three-channel cavities extend inwardly until they all meet in the inside, therby forming a hallow block of three intercrossed rings

5. A hallow building block as set forth in claim 4, wherein said three-channel cavities extend inwardly in in the shape and form of eighteen secondary solids unified in one, whereby the surface of said secondary solid consists of the resulting process of bringing together and only by the borders, two squares with normally a side length of (a*sqrt (2)), starting from an eight point star position in such a way that the result of said union forms two smaller square lids with side length (a) and eight smaller triangular faces on the sides, being one of said lids in the top, the other one in the bottom and the trianglular faces on the sides forming a set of four gearing angles, wherby two of said gearing angles, the ones formed arround the periphery of said bottom lid, must be adjusted to 45, in such a way that allows for the union of eight of said secondary solids, by said lateral gearing angles to form one ring, whereby three of said rings are brought together to form said unified solid, in such a way that maches said "hallow three intercrossed rings surface".

6. A building block as set forth in claim 1, wherin attachment means may be placed in said centers (Y). being the polarity of the centers 123, 145, 246, 356 contrary to the polarity of the centers 124, 135, 236, 456.

7. A building block as set forth in claim 5, whereby attachement means may be placed at all of said secondary solids, by following a 2-way polarity scheme at the squares (Z) (FIG, 7) and a 4-way polarity sheme at the squares (X) (FIG. 8),

8. A building block as set forth in claim 1, wherby said surface shows three different primary colors for the domains of said orthogonal axes limits (x, y, z), whereby said centers (Y) constitute the place where the three said primary colors come together.

9. In a toy building set, a pair of identical building blocks of a normally spherical shape each comprising a spherical surface with radius (R) and at least eight cavities extending inwardly from said surface and arranged among the centers (Y) of the eight orthogonal quadrants of the block, said cavities extending normally along the axis (Y) in direction to the absolut center (O) of said blocks and at the same time inwardly in a three-channel fashion towards the crossings (X) that define the orthogonal limits of each of said quadrants, the depth of said three-channel cavities being such that when two quadrants of said pair of identical blocks are geared together in a "Star of David" type of union at their centers (Y), the three orthogonal limits (X) of one of the blocks said quadrant, the three orthogonal limits (X) of the other blocks said quadrant and the two absolut centers (O) of both said blocks, form a group of eight coordinates that define the corners of an imaginary cube, having the sides of said cube a length of said radius (R), whereby said "Star of David" type of union is accomplished when the three-channel cavity on one of said blocks quadrant is geared with the three-channel cavity of the other said blocks quadrant in an interbedded way and forming two imaginary superimposed triangles.

FIGURA 1

FIGURA 2

FIGURA 3

3,5

2,5

3,5

R

2,5

2,5

FIGURA 4

M

F

M

F

FIGURA 5

X                    Y

FIGURA 6

FIGURA 7

FIGURA 8

FIGURA 9